# EUROPEAN PATENT SPECIFICATION

(11) **EP 2 342 883 B1**
(45) Date of publication and mention of the grant of the patent: **07.11.2012**
(21) Application number: 09787272.5
(22) Date of filing: 22.09.2009
(51) Int. Cl.: H04L 29/06

(54) **FILE TRANSFER IN CONFERENCE SERVICES**
DATEITRANSFER BEI KONFERENZDIENSTEN
TRANSFERT DE FICHIERS DANS LES SERVICES DE CONFÉRENCE

(30) Priority: 23.09.2008 US 236004
(43) Date of publication of application: 13.07.2011
(73) Proprietor: Telefonaktiebolaget LM Ericsson (publ), 164 83 Stockholm (SE)
(72) Inventor: GODIN, Andre, Laval, Québec H7R 5X2 (CA); ZHU, Zhongwen, Saint-Laurent, Québec H4R 3H7 (CA); GREENE, Nancy, Outremont, Québec H2V 1G7 (CA)
(74) Representative: Röthinger, Rainer
(86) International application number: PCT/IB2009/054157
(87) International publication number: WO 2010/035222

(56) References cited:
- WO-A-2006/113116
- US-A1- 2006 047 749
- GARCIA-MARTIN NOKIA SIEMENS NETWORKS M ISOMAKI NOKIA G CAMARILLO S LORETO ERICSSON P KYZIVAT CISCO SYSTEMS M: "A Session Description Protocol (SDP) Offer/Answer Mechanism to Enable File Transfer; draft-ietf-mmusic-file-transfer-mech-08.tx t" A SESSION DESCRIPTION PROTOCOL (SDP) OFFER/ANSWER MECHANISM TO ENABLE FILE TRANSFER; DRAFT-IETF-MMUSIC-FILE-TRANSFER-MECH-08.TX T, INTERNET ENGINEERING TASK FORCE, IETF; STANDARDWORKINGDRAFT, INTERNET SOCIETY (ISOC) 4, RUE DES FALAISES CH- 1205 GENEVA, vol. mmusic, no. 8, 20 May 2008 (2008-05-20), XP015058540 cited in the application

## Description

### TECHNICAL FIELDS

The present invention relates generally to telecommunications systems and, more specifically, to file transfer in conference services.

### BACKGROUND

As the level of technology increases, the options for communications have become more varied. For example, in the last 30 years in the telecommunications industry, personal communications have evolved from a home having a single rotary dial telephone, to a home having multiple telephone, cable and/or fiber optic lines that accommodate both voice and data. Additionally, cellular phones and Wi-Fi have added a mobile element to communications.

To accommodate the new and different ways in which IP networks are being used to provide various services, new network architectures are being developed and standardized. IP Multimedia Subsystem (IMS) is an architectural framework utilized for delivering IP multimedia services to an end user. The IMS architecture has evolved into a service-independent topology which uses IP protocols, e.g., Session Initiation Protocol (SIP) signaling, to provide a convergence mechanism for disparate systems. In part this is accomplished via the provision of a horizontal control layer which isolates the access network from the service layer. Among other things, IMS architectures may provide a useful platform for the rollout of various messaging and conferencing systems and services.

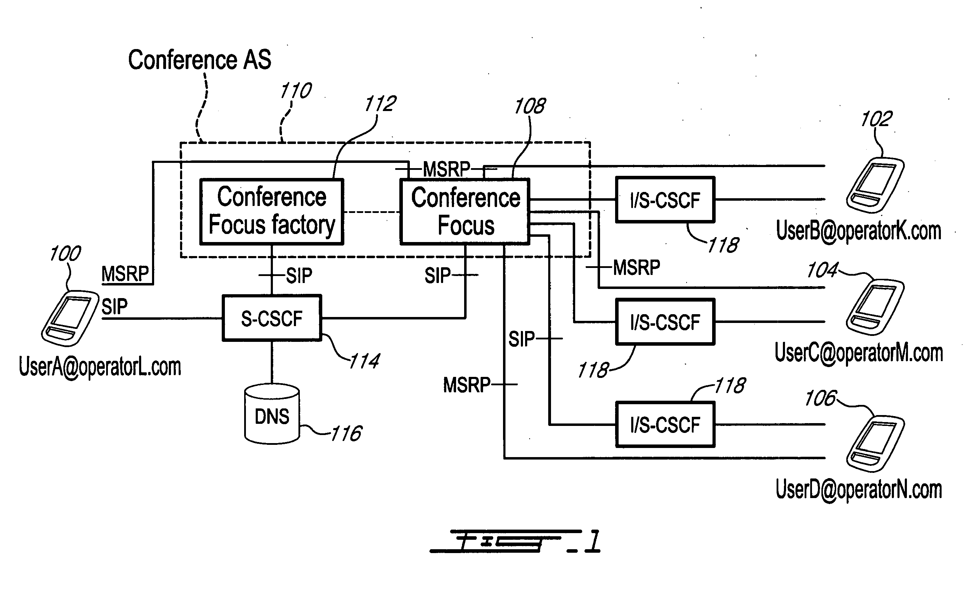

For example, Multimedia Messaging Conference service is one of the basic services provided in IMS networks. The mechanisms used to implement this conference service are described in, for example, A. Johnston, Avaya and O. Levin, "Session Initiation Protocol Call Control - Conferencing for User Agents", August, 2006, RFC4579, J. Rosenberg, "A Framework for Conferencing with the Session Initiation Protocol (SIP)", February, 2006, RFC 4353, and J. Rosenberg, H. Schulzrinne and O. Levin, Ed. "A Session Initiation Protocol (SIP) Event Package for Conference State", August 2006, RFC 4575, the disclosures of which are incorporated here by reference. An exemplary, high level architecture for providing this conference service, as well as conference services according to the exemplary embodiments described below, is illustrated in Figure 1.

As shown in Figure 1, each endpoint 100, 102, 104 and 106 which is being provided with the conference service has both a SIP session and a Message Session Relay Protocol (MSRP) session with the Conference Focus (CF) entity 108. In the context of this example, an endpoint 100, 102, 104 and 106 can be considered to be a user, an address (e.g., userA@operatorL.com), an end user device, or any combination thereof. The CF entity 108 may be implemented within a conference application server (AS) 110, which also includes a CF "factory" 112 for generating instances of the CF entity 108 for each conference which is established, e.g., in this example by the instance created when userA establishes a conference via SIP signaling through its serving call session control function (S-CSCF) 114. The S-CSCF 114 may also be connected to a domain name server (DNS) 116 to resolve domain name queries into IP addresses. Thus, each conference message initiated by a user, and sent by the associated endpoint, is received by the CF 108 and sent to the other endpoints in the conference by the CF 108 through the MSRP sessions. SIP control signaling associated with the conference service passes through the IMS network, as represented by the various interrogating/serving (I/S) CSCFs 118.

There may be instances where the endpoints 100, 102, 104 and 106 involved in a multimedia, conferencing session would like to exchange files within the context of that session. In this context, a file can be any type of media, e.g., audio, video, text, etc. With MSRP, it is possible to embed files as Multipurpose Internet Mail Extensions (MIME) objects inside the stream of instant messages. This exchange mechanism is sometimes referred to as the "file attached to IM" mechanism. However, the "file attached to IM" mechanism does not allow a user to accept or reject a request containing a file, which alternative mechanism is sometimes referred to as "file transfer".

Thus, in order to allow a user to distinguish a file transfer from a "file attached to IM", the Internet Engineering Task Force (IETF) has defined a file transfer mechanism as described, for example, in the document by M. Garcia Martin, M. Isomaki, G. Camarillo, entitled "A Session Description Protocol (SDP) Offer/ Answer Mechanism to Enable File Transfer", found at draft-ietf-mmusic-file-transfer-mech-07.txt (referred to hereafter as "the Martin et al. document"), the disclosure of which is incorporated here by reference. This mechanism makes it possible for a sender to send a request for a file transfer to a recipient, and for that recipient to accept or decline the request. The file transfer mechanism also makes it possible for a recipient to request a file from a sender, and for that sender to be able to decide whether or not to send the requested file.

The file transfer described in the Martin et al. document is requested through a SIP re-INVITE request and is carried out using an MSRP session by adding a new media stream, i.e., an 'm=' line, in the Session Description Protocol (SDP) body part of the SIP re-INVITE request (the first 'm=' line being the one for the conference session). Existing media streams are removed by creating a new SDP with the port number for that stream set to zero. An offerer that wishes to send or receive more than one file generates an "m=" line per file in the SDP. In addition to the file transfer mechanism described in the Martin et al. document, OMA (Open Mobile Alliance) has defined a SIP/SIMPLE Instant Messaging document "Instant Messaging using SIMPLE", identified as OMA-TS-SIMPLE IM-V1 0-20080506-D, which contains the specification for an IM service enabler.

However, these prior mechanisms support transfers in conference services between only two endpoints. There exists no mechanism for efficiently transferring files among more than two endpoints in a conference.

WO 2006/113116 A discloses a method and a system for transmitting a data file from one user to multiple end users through MSRP (Message Sessions Relay Protocol). A CSCF server receives a SIP invite from the requesting user and in response to that, it transmits multiple INVITE's to all the other users. After the other users respond with OK, the CSCF arranges for an Application Server to transmit the file to all these end users.

US 2006/047749 A1 discloses a conferencing system using a MCU (Multipoint Controller Unit), which enables file transfers between multiple participants.

### SUMMARY

Systems, methods, devices and software according to these exemplary embodiments provide techniques for file transfer among endpoints in a conference system or service by providing a controlling entity, e.g., a conference focus, with logic to enable that entity to modify Session Description Protocol (SDP) media descriptions and use those modified SDP media descriptions to issue invitations for file transfer and coordinate responses with the resulting file transfers.

According to one exemplary embodiment, a method for transferring at least one file to multiple endpoints in a conference includes the steps of receiving a first request message for a first file transfer from a first endpoint associated with the conference, modifying SDP media descriptions associated with at least a second endpoint and a third endpoint, which endpoints are also associated with said conference, by providing a media line associated with said file transfer to an SDP media description associated with said second endpoint and to an SDP media description associated with said third endpoint based upon information provided in said first request message, transmitting invitation messages for the first file transfer to the second and third endpoints using the modified media descriptions, and selectively transferring the at least one file among the first, second and third endpoints based upon responses to the invitation messages.

According to another exemplary embodiment, a communications node includes an interface for receiving a first request message for a first file transfer from a first endpoint associated with the conference, a memory device for storing SDP media descriptions associated with a second endpoint and a third endpoint of the conference, and a processor configured to modify the SDP media descriptions by providing a media line associated with said file transfer to an SDP media description associated with said second endpoint and to an SDP media description associated with said third endpoint based upon information provided in said first request message, and to transmit invitation messages for said first file transfer to said second and third endpoints using said modified media descriptions, wherein the processor is further configured to selectively transfer the at least one file among the first, second and third endpoints based upon responses to the invitation messages.

According to still another exemplary embodiment, a computer-readable medium, contains program instructions stored thereon which, when executed by a computer or processor, perform the steps including receiving a first request message for a first file transfer from a first endpoint associated with the conference, modifying SDP media descriptions associated with at least a second endpoint and a third endpoint, which endpoints are also associated with said conference, by providing a media line associated with said file transfer to an SDP media description associated with said second endpoint and to an SDP media description associated with said third endpoint based upon information provided in said first request message, transmitting invitation messages for the first file transfer to the second and third endpoints using the modified media descriptions, and selectively transferring the at least one file among the first, second and third endpoints based upon responses to the invitation messages.

### BRIEF DESCRIPTION OF THE DRAWINGS

The accompanying drawings illustrate exemplary embodiments, wherein:
Figure 1 illustrates a conference system in which exemplary embodiments can be implemented;
Figure 2 is a flowchart depicting a method for file transfer according to an exemplary embodiment;
Figure 3 is a signaling diagram illustrating a method for file transfer according to another exemplary embodiment;
Figure 4 is a flowchart showing a method for completing a file transfer according to an exemplary embodiment;
Figure 5 shows a communication node according to exemplary embodiments; and
Figure 6 is a flowchart depicting a method for transferring a file according to an exemplary embodiment.

### DETAILED DESCRIPTION

The following detailed description of the exemplary embodiments refers to the accompanying drawings. The same reference numbers in different drawings identify the same or similar elements. Also, the following detailed description does not limit the invention. Instead, the scope of the invention is defined by the appended claims.

As mentioned above, conferencing services, systems and methods currently do not provide a mechanism for efficiently transferring files among more than two endpoints in a conference session. Thus, for example, if user A in Figure 1 wants to send the same file to users B, C and D, she or he has to initiate three, separate individual file transfers directly to B, C and D using the mechanism described in the Martin et al. document. It will be appreciated that this inefficiency associated with file transfers in conventional conferencing services is compounded if multiple, substantially simultaneous file transfer requests are sent from each of the conference participants to each of the other conference participants. Thus, according to exemplary embodiments, logic is added to the CF entity 108 to, among other things, enable the CF entity 108 to be responsible for managing the SDP offer with each endpoint 100, 102, 104, 106 by adding or replacing SDP 'm=' lines based on file transfer requests that the CF 108 sends or receives to or from an endpoint 100, 102, 104, 106, respectively.

As will be appreciated by those skilled in the art, the SDP message or media description associated with each conference participant defines a media session framework, e.g., media types and formats, associated with the multimedia session which that participant has negotiated. For example, as described in RFC 4566, entitled "SDP: Session Description Protocol", July 2006, available at http://tools.ietf.org/html/rfc4566, the disclosure of which is incorporated here by reference, each SDP may include one or more of the following parameters (optional parameters being provided with an asterisk):

Session description
v= (protocol version)
o= (originator and session identifier)
s= (session name)
i=* (session information)
u=* (URI of description)
e=* (email address)
p=* (phone number)
c=* (connection information -- not required if included in all media)
b=* (zero or more bandwidth information lines)
One or more time descriptions ("t=" and "r=" lines; see below)
z=* (time zone adjustments)
k=* (encryption key)
a=* (zero or more session attribute lines)
Zero or more media descriptions

Time description
t= (time the session is active)
r=* (zero or more repeat times)

Media description, if present
m= (media name and transport address)
i=* (media title)
c=* (connection information -- optional if included at session level)
b=* (zero or more bandwidth information lines)
k=* (encryption key)
a=* (zero or more media attribute lines)

Various other examples of SDP media descriptions and portions of SDP media descriptions as they are used in conference file transfers according to these exemplary embodiments are provided below.

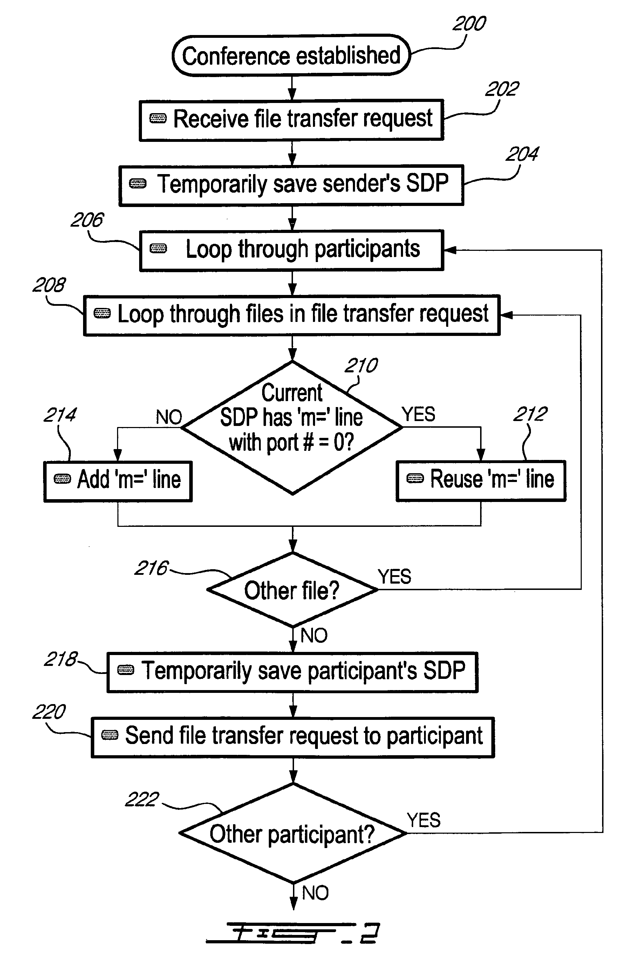

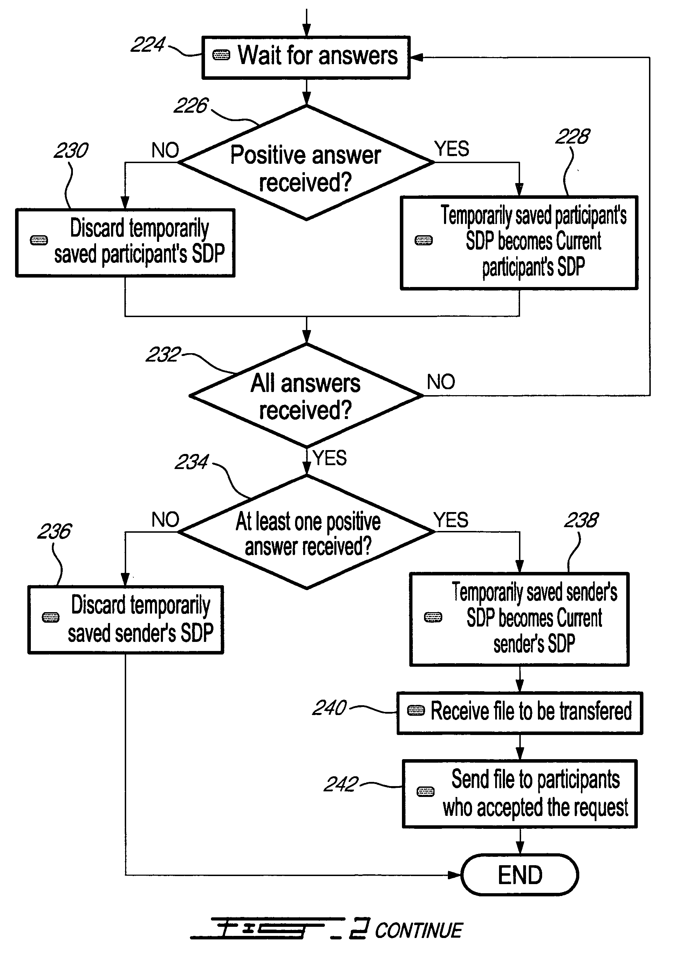

Using the exemplary conferencing system illustrated in Figure 1 as contextual background, a method for file transfer among multiple users in a conference session according to an exemplary embodiment will now be described with respect to the flow diagram of Figure 2. Therein, at conference establishment (step 200), the CF entity 108 saves the SDP media description which the CF entity 108 has received from participants that joined (e.g., dial-in participants) the conference or the SDP media description which the CF entity 108 has created for invited participants (e.g., dial-out participants) as the current SDP of each participant. This gives the CF entity 108 a complete set of SDP media descriptions which can be edited and managed in order to facilitate file transfer among endpoints. For example, when the CF entity 108 receives a file transfer request (step 202) from one conference participant for sending or receiving file(s), the CF entity 108 first saves the new SDP media description received from the requestor at step 204. As a purely illustrative example, suppose that user A in Figure 1 sends a request to CF entity 108 to send a digital photograph of herself which is received by CF entity 108 at step 202. The corresponding SDP media description in the request (which is saved by the CF entity 108 at step 204) could, purely as an illustrative example, look like this:

### SDP of User A Upon Request for File Transfer

v=0
o=alice 2890844526 2890844526 IN IP4 host.atlanta.example.com
s=
c=IN IP4 host.atlanta.example.com
t=0 0
**m=message 7654 TCP/MSRP***
i=This is my latest picture
a=sendonly
a=accept-types:message/cpim
a=accept-wrapped-types: *
a=path:msrp://atlanta.example.com:7654/jshA7we;tcp
a=file-selector:name:"My cool picture.jpg" type:image/jpeg size:32349
a=file-transfer-id:vBnG916bdberum2fFEABR1FR3ExZMUrd
a=file-disposition attachment
a=file-date:creation:"Mon, 15 May 2006 15:01:31 +0300"
a=file-icon:cid:id2@alicepc.example.com
a=file-range: 1-32349
In this exemplary request, the SDP media description has one media or 'm=' line which specifies the media to be conveyed by the requested file transfer. An SDP media line has the format of m=<media> <port> <proto> <fmt> ..., where the <media> parameter specifies the media type associated with that 'm' line, e.g., video, audio, text, message, or application, the <port> parameter specifies the transport port to which the media is being sent, the <proto> parameter specifies the transport protocol, e.g., UDP, TCP, etc., and the parameter <fmt> specifies the media format description.

Upon saving the received SDP media description associated with the file transfer, the CF entity 108 then processes the other participants' SDP media descriptions by, for example, passing through the double loop associated with steps 206 and 208 in Figure 2. Therein, the received file transfer request is processed for (a) each participant in the conference and (b) each file which is to be sent or received via the transfer received by the CF entity 108 at step 202. More specifically, for each participant, the CF entity 108 retrieves the currently stored version of that participant's SDP media description and checks to see if that SDP media description has an 'm' line with a <port> parameter value set equal to 0, i.e., signifying that the media session corresponding to that 'm' line has been terminated, at step 210. If so, the flow follows the 'Yes' branch from step 210 to step 212 wherein the 'm' line having the <port> = 0 is reused for the requested file transfer. In the context of the purely illustrative SDP media description above, this means setting that particular 'm' line to the value received from the file transfer recipient with a port number belonging to the CF 108, e.g., m=message 4321 TCP/MSRP*.

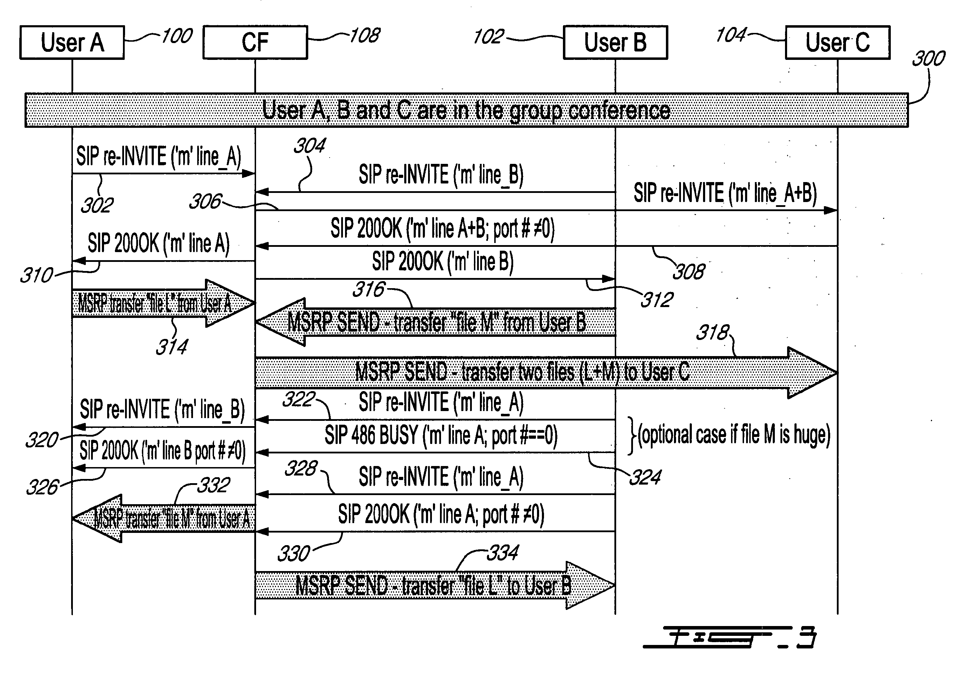

If, on the other hand, the conference participant whose SDP is being evaluated on this iteration of the outer loop does not have an existing 'm' line with a port value equal to zero, then the flow follows the "No" branch from step 210 to step 214 wherein a new 'm' line is added to that participants' SDP media description with the value from the received file transfer request but with a port number belonging to the CF 108. If there are more files to be transferred (step 216), then the inner loop is reiterated until all of the file transfers have been processed for this participant. The resulting, modified SDP media description is then saved (at least temporarily) at step 218 and the file transfer request can be sent to that participant at step 220 using the modified SDP media description. An example of various signaling which can be associated with file transfers according to these exemplary embodiment is provided below with respect to Figure 3. The outer processing loop may then be iterated once again by the CF entity 108 at step 222 if there are additional participants to be processed ("Yes" path) with respect to the pending file transfer request.

Otherwise, if the CF entity 108 has sent out all of the file transfer requests to the conference participants, the flow moves on to step 224 in Figure 2 wherein it waits for responses to those file transfer requests. When a response is received, the CF entity 108 may then process the response according to this exemplary embodiment as shown in steps 226, 228 and 230. More specifically, if a positive response is received in response to the file transfer request from a participant at step 226, the flow follows the "Yes" path wherein the modified SDP media description, which was previously, temporarily stored for that participant at step 218, becomes that participant's current SDP media description at step 228. Alternatively, if a negative response is received in response to the file transfer request at step 226, the flow follows the "No" path wherein the modified SDP media description which was previously, temporarily stored for that participant at step 218 is discarded at step 230. The process can check to determine whether, at step 232, all of the participants in the conference have responded to the file transfer request or not and selectively loop back to step 224 to wait for additional responses. Alternatively, although not shown in Figure 2, the process can continue to the file transfer portion of the process after each positive response is received from a participant to perform the file transfers serially rather than in parallel after all responses are received.

If, however, no positive responses are received at step 234, then the CF entity 108 can discard the SDP media description which was temporarily saved at step 204, i.e., the SDP media description associated with the file transfer request from the initiator, at step 236. Otherwise, if at least one positive answer has been received at step 234, then that SDP media description which was temporarily saved upon receipt by the CF entity 108 at step 204 becomes the sender's current SDP media description at step 238. The CF entity 108 may then inform the sender (originator of the file transfer request) that the file transfer request has been accepted and receive the file to be transferred at step 240. This file can then be sent, at step 242, to those participants who accepted the request.

In addition to enabling file transfer among conference participants, e.g., enabling one participant to send a file to two or more other participants or enabling one participant to request a file from one or more participants, exemplary embodiments further facilitate signal reduction and efficiency by enabling the CF entity 108 to aggregate file transfer requests that are received at substantially the same time. These exemplary embodiments will now be described and illustrated at the signaling level with respect to the example shown in Figure 3.

As mentioned above, exemplary embodiments of the present invention may be implemented in IMS systems so, in the exemplary signaling diagram of Figure 3, SIP signaling is illustrated although the present invention is not so limited. Figure 3 starts with three users, i.e., user A, user B and user C already being part of an established conference managed by CF 108. Although the signaling for setting up this conference is not explicitly shown in Figure 3, such signaling is represented by block 300 and could include, for example, the following signaling. For example, user A 102 could initially transmit a SIP INVITE message to the CF entity 108 to initiate the conference or chat session. The CF 108 could acknowledge the SIP INVITE from user A with a 200 OK message and sends SIP INVITE messages toward users B and C, who were identified in the SIP INVITE message as conference participants. The SIP INVITE messages can be acknowledged by users B and C via 200 OK messages.

After the conference is thus established, suppose that user A sends a request to transfer one or more files to CF entity 108 via another SIP INVITE message 302 having an SDP media description with a corresponding media line that is associated with the file(s) to be transferred. Moreover, at substantially the same time or within a predetermined time interval after user A's file transfer request is received by CF entity 108, user B also sends a request to transfer one or more files to CF entity 108 via SIP INVITE message 304 having an SDP media description with its own, corresponding media line that is associated with the file(s) to be transferred. Note that the time interval within which two (or more) file transfer requests can be considered concomitant for aggregation by the CF entity in terms of processing can be varied based upon the particular implementation. Additionally, although this example refers to multiple file "pushes" wherein the users A and B wish to send one or more files to the other participants in the conference, it will be appreciated by those skilled in the art that this exemplary embodiment applies equally to multiple file "pulls", e.g., wherein users A and B are requesting that one or more files be sent to them from other participants, or to a mixture of file pulls and pushes.

Returning to Figure 3, the CF entity 108 can process the concomitant file transfer requests 302 and 304 in a manner which is similar to that described above with respect to the exemplary embodiment of Figure 2 in order to modify the SDP media description of each participant which was saved in the CF entity 108 at conference establishment. More specifically, the file(s) associated with all of the requests received at substantially the same time or within a receive window can be aggregated for processing at step 208 with respect to each participant. For example, suppose that SIP INVITE message 302 included an SDP media description with a media line of "m=message 7654 TCP/MSRP *" associated with its file transfer request and that SIP INVITE message 304 included an SDP with a media line of "m=message 7655 TCP/MSRP *" associated with its file transfer request. Step 208 of Figure 2 could then, for example, process these as separate iterations with respect to user C who should receive both requests. Thus, CF entity 108 could, for example, modify the previously saved version of user C's SDP media description to be as follows:

### Modified SDP of User C for Requesting File Transfer

v=0
o=cf 2890844526 2890844526 IN IP4 host.atlanta.example.com
s=
c=IN IP4 host.atlanta.example.com
t=0 0
**m=message 4321 TCP/MSRP ***
i=This is my latest picture
a=sendonly
a=accept-types:message/cpim
a=accept-wrapped-types: *
a=path:msrp://atlanta.example.com:7654/jshA7we;tcp
a=file-selector:name:"My cool picture.jpg" type:image/jpeg size:32349
a=file-transfer-id:vBnG916bdberurn2fFEABRl FR3ExZMUrd
a=file-disposition:attachment
a=file-date:creation:"Mon, 15 May 2006 15:01:31.+0300"
a=file-icon:cid:id2@alicepc.example.com
a=file-range:1-32349
**m=message 4322TCP/MSRP ***
i=This is my nicest picture
a=sendonly
a=accept-types:message/cpim
a=accept-wrapped-types: *
a=path:msrp:llatlanta.example.com:7655/jshA7we;tcp
a=file-selector:name:"aPicture.jpg" type:image/jpeg size:35419
a=file-transfer-id:Gdfvng764ghe64tVBR1FR3weubf4d
a=file-disposition:attachment
a=file-date:creation:"Tue, 8 Jul 2006 16:23:36 +0300"
a=file-icon:cid:id2@bobpc.example.com
a=file-range: 1-35419
Note that in the foregoing, modified version of user C's SDP media description, the CF entity replaced the port numbers received in the file transfer requests, i.e., 7654 and 7655, with port numbers of its own, i.e., 4321 and 4322, which the CF entity 108 has assigned for these potential file transfers.

This modified SDP media description, containing the media lines from both concomitant file transfer requests, may then be temporarily stored (per step 218 of Figure 2) and used as part of the file transfer request which is sent to user C as a SIP (re-)INVITE message 306. Suppose that, for example, user C responds with a 200 OK message 308 wherein both of the two media lines in the SDP media description have a <port> value equal to something other than zero, i.e., indicating that user C will accept both of the file transfers from users A and B. The CF entity 108 can then request the file(s) L and M to be transferred from both users A and B, respectively, since at least one positive response was received for each file transfer, e.g., by sending 200 OK messages 310 and 312 including the respective media lines having port parameters set to nonzero values. Users A and B can then transfer the file(s) L and M associated with each request to the CF entity 108 for distribution using the MSRP connections set up for the conference session as shown by arrows 314 and 316, respectively. The CF entity 108 sends the files from both users A and B to user C via MSRP signaling 318.

In a similar manner, temporary SDP media descriptions could be created and saved for users A and B by the CF entity 108 having a single 'm' line associated with the file transfer request from users B and A, respectively, as shown below.

### Modified SDP of User A for Requesting File Transfer:

v=0
o=cf 2890844526 2890844526 IN IP4 host.atlanta.example.com
s=
c=IN IP4 host.atlanta.example.com
t=0 0
**m=message 4322 TCP/MSRP ***
i=This is my nicest picture
a=sendonly
a=accept-types:message/cpim
a=accept-wrapped-types: *
a=path:msrp://atlanta.example.com:7655/jshA7we;tcp
a=file-selector:name:"aPictutre.jpg" type:image/jpeg size:35419
a=file-transfer-id:Gdfvng764ghe64tVBRlFR3weubf4d
a=file-disposition:attachment
a=file-date:creation:"Tue, 8 Jul 2006 16:23:36 +0300"
a=file-icon:cid:id2@bobpc.example.com
a=file-range:1-35419

### Modified SDP of User B for Requesting File:

v=0
o=cf 2890844526 2890844526 IN IP4 host.atlanta.example.com
s=
c=IN IP4 host.atlanta.example.com
t=0 0
**m=message 4321 TCP/MSRP ***
i=This is my latest picture
a=sendonly
a=accept-types:message/cpim
a=accept-wrapped-types: *
a=path:msrp://atlanta.example.com:7654/jshA7we;tcp
a=file-selector:name:"My cool picture.jpg" type:image/jpeg size:32349
a=file-transfer-id:vBnG916bdberum2fFEABR1 FR3ExZMUrd
a=file-disposition:attachment
a=file-date:creation:"Mon, 15 May 2006 15:01:31 +0300"
a=file-icon:cid:id2@alicepc.example.com
a=file-range: 1-32349
CF entity 108 can then use these modified SDP media descriptions to send out file transfer requests to users A and B as SIP re-INVITE messages 320 and 322, respectively. Suppose also, however, that user B decides to decline the file transfer opportunity offered by user A at that time, e.g., since user B is still transferring the file M to the CF entity 108 as part of the MSRP send 316. In this case, user B sends, for example, a 486 BUSY message 324 back to CF entity 108 with a corresponding media line having a <port> value equal to zero, i.e., indicating to CF entity 108 that user B declines the request for file transfer at that particular time. User A returns a 200 OK message 326 indicating acceptance of the file transfer from user B. The CF entity 108 can, optionally, wait for a period of time after receiving the negative response from user B and again send a SIP re-INVITE message 328 asking user B to accept the file L from user A. More generally, the CF entity 108 can determine how to handle a user's indication to decline a file transfer based upon the content of the received response. Upon receipt of a positive response, CF entity 108 can then send the file M to user A and the file L to user B via MSRP signaling 332 and 334, respectively. It will be appreciated by those skilled in the art that acknowledgement messages, e.g., SIP ACK messages, which are typically returned from the receiver of a SIP 200 OK message have been omitted from the signaling diagram of Figure 3 for clarity. Also note that an MSRP switch (not shown) may be co-located with the CF entity 108 or not co-located with the CF entity 108.

As mentioned above, the CF entity 108 also has the intelligence according to these exemplary embodiments to reuse media lines in SDP media descriptions when they become available, e.g., if a user or client rejects a file transfer, or once a file transfer has been completed as described below. For example, in the foregoing exemplary embodiment described above with respect to Figure 3, after user B rejected the file transfer via 486 Busy message 324, the stored SDP media description available to CF entity 108 could look like the following:

### SDP for User B Stored in CF Entity 108 After Rejection of File Transfer

v=0
o=cf 2890844526 2890844526 IN IP4 host.atlanta.example.com
s=
c=IN IP4 host.atlanta.example.com
t=0 0
**m=message 0 TCP/MSRP ***
When such an SDP media description is evaluated as part of the file transfer request process according to exemplary embodiments, the media line in this type of SDP media description can be reused at step 212 since it includes an inactive media line. Conversely, if media lines exist in an SDP media description being evaluated by the CF entity 108 with nonzero port values, these media lines should not be reused and new media lines should be added as needed to negotiate the potential file transfers. For example, suppose that user C had accepted a file transfer request prior to those requests discussed above with respect to Figure 3, which file transfer is still on-going. In that case, when users A and B send their file transfer request, the CF entity 108 will preserve the first 'm=' line and add two new 'm=' lines. The subsequent invitation message to user C will include a modified SDP media description which has all three media lines.

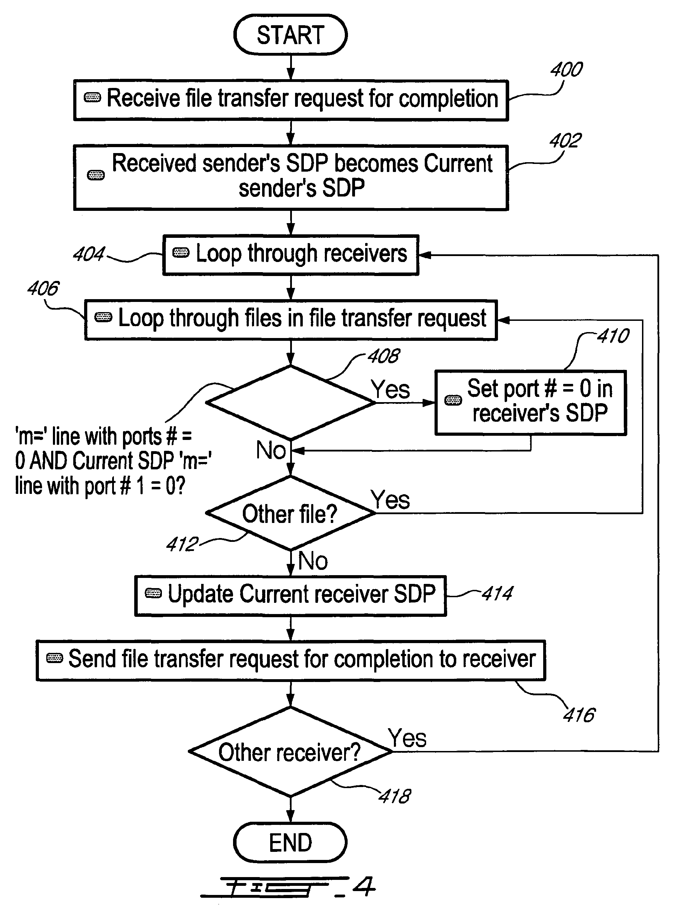

Once an endpoint has finished receiving the one or more files that are being transferred, according to an exemplary embodiment that endpoint sends an indication of such completion back to the CF entity 108. The CF entity 108 then updates its stored SDP media descriptions for the recipients of transferred files as, for example, shown in the exemplary flow diagram of Figure 4. Therein, at step 400, the process begins when the CF entity 108 receives a message indicating that a file transfer has been completed from one of the participants, e.g., which message can include an SDP media description with one or more media lines corresponding to the completed file transfer having a <port> parameter value equal to zero. This SDP media description is then set to be the current SDP media description at step 402, i.e., the SDP media description which will be compared against the SDP media descriptions stored by the CF entity 108 for those endpoints which participated in the file transfer of interest. The CF entity 108 then loops through the relevant endpoints (termed "receivers" in Figure 4) via step 404 by retrieving the endpoint's stored SDP media description and, if there are multiple files in the file transfer request, through each file via step 406 to update the stored SDP media descriptions. More specifically, for a particular file associated with a completed transfer request and a given recipient of that file, the CF entity 108 at step 408 determines whether the version of that recipient's SDP media description stored in the memory device associated with the CF entity 108 has a corresponding media line with a <port> parameter value that is nonzero, while the current SDP media description, i.e., the SDP media description returned with the completion indication in step 400 has the same media line with a <port> parameter set equal to zero.

When this occurs, the flow proceeds to step 410 wherein that media line of the SDP media description being evaluated is updated so that the <port> value parameter of the media line associated with the completed file transfer is set equal to zero. After all of the media lines associated with transferred files for this receiver (endpoint) have been checked (step 412), that receiver's SDP media description is updated and stored again in the memory device at step 414. The CF entity 108 may then, optionally, send a message at step 414 to that receiver indicating that it has acknowledged completion of the file transfer and updated that receiver's SDP media description to reflect completion of the file transfer. Step 418 enables the CF entity 108 to iterate through all of the receivers/endpoints that were involved in this particular file transfer.

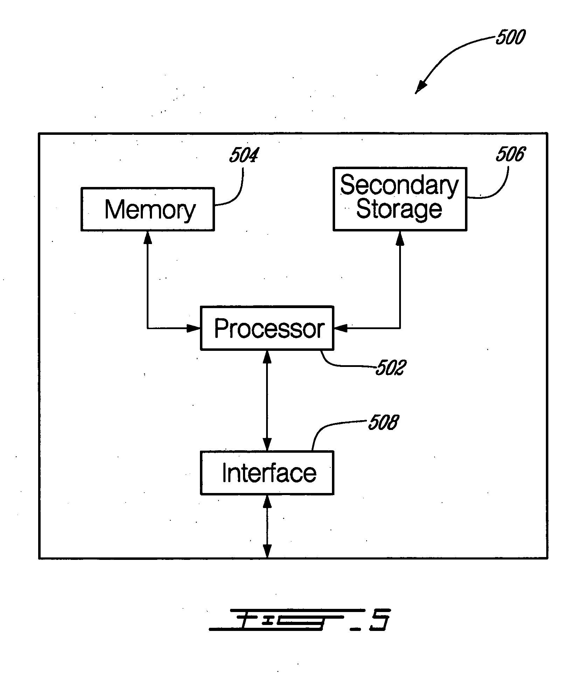

The exemplary embodiments described above provide for, among other things, file transfer among multiple endpoints in a conferencing system or service. The CF entity 108 which supports this functionality can, for example, be implemented as part of an application server or another type of communications node. An exemplary communications node architecture 500 which can be used, for example, to implement CF entity 108, or other nodes in the systems described above will now be described with respect to Figure 5. Therein, node 500 can contain a processor 502 (or multiple processor cores), memory device 504, one or more secondary storage devices 506, and an interface unit 508 to facilitate communications between node 500 and the rest of the network. In some cases, e.g., where node 500 is operating as a wireless endpoint, interface unit 510 may include transceiver elements for communicating over an air interface with other network nodes. In other cases, e.g., where node 500 is operating as a CF entity 108, the interface unit 508 can operate to receive one (or more) request messages for file transfers from endpoint(s) associated with a conference. The memory device 504 can operate, as described above, to store various versions of the media descriptions, e.g., SDP media descriptions, associated with the conference endpoints, for example as described above with respect to Figures 2-4. Likewise, the processor 502 can be configured, e.g., via software instructions, hardware instructions or the like, to modify the media descriptions using information from the received request message(s) and to transmit invitation messages, e.g., SIP INVITE messages), for the file transfer(s) to the recipient endpoints using the modified media descriptions, for example as described above with respect to Figures 2-4.

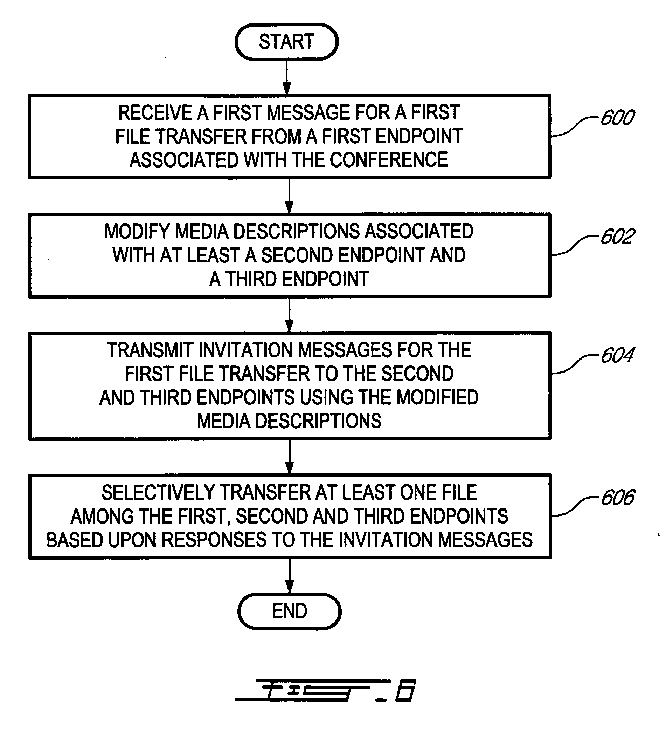

Utilizing the above-described exemplary systems according to exemplary embodiments, a method for transferring at least one file to multiple endpoints in a conference can include the steps illustrated in the flow chart of Figure 6. Therein, at step 600, a first request message for a first file transfer is received from a first endpoint associated with the conference. Media descriptions associated with at least a second endpoint and a third endpoint, which endpoints are also associated with the conference, are modified at step 602 using information from the first request message. Invitation messages for the first file transfer to the second and third endpoints are using said modified media descriptions are transmitted at step 604. At least one file is then transferred among the first, second and third endpoints based selectively upon responses to the invitation messages at step 606.

As will be appreciated by those skilled in the art, methods such as that illustrated in Figure 6 can be implemented completely or partially in software as part of the logic associated with a CF entity 108. Thus, systems and methods for processing data according to exemplary embodiments of the present invention can be performed by one or more processors executing sequences of instructions contained in a memory device. Such instructions may be read into the memory device 504 from other computer-readable mediums such as secondary data storage device(s) 506, which may be fixed, removable or remote (network storage) media. Execution of the sequences of instructions contained in the memory device causes the processor to operate, for example, as described above. In alternative embodiments, hard-wire circuitry may be used in place of or in combination with software instructions to implement exemplary embodiments.

The above-described exemplary embodiments are intended to be illustrative in all respects, rather than restrictive, of the present invention which is defined by the following claims. No element, act, or instruction used in the description of the present application should be construed as critical or essential to the invention unless explicitly described as such. Also, as used herein, the article "a" is intended to include one or more items.

## Claims

1. A method for transferring at least one file to multiple endpoints in a conference, the method performed at a communications node and comprising:
- receiving (S600, S202) a first request message for a first file transfer from a first endpoint associated with said conference;
- modifying (S602) Session Description Protocol, SDP, media descriptions associated with at least a second endpoint and a third endpoint, which endpoints are also associated with said conference, by providing (S212, S214) a media line associated with said file transfer to an SDP media description associated with said second endpoint and to an SDP media description associated with said third endpoint based upon information provided in said first request message;
- transmitting (S604) invitation messages for said first file transfer to said second and third endpoints using said modified SDP media descriptions; and
- selectively transferring (S606) said at least one file among said first, second and third endpoints based upon responses to said invitation messages.

2. The method of claim 1, wherein said step (S212, S214) of providing a media line further comprises:
- reusing (S212) an existing media line in at least one of said SDP media description associated with said second endpoint and said SDP media description associated with said third endpoint.

3. The method of claim 1, wherein said step (S212, S214) of providing a media line further comprises:
- adding (S214) a new media line to at least one of said SDP media description associated with said second endpoint and said SDP media description associated with said third endpoint.

4. The method of claim 1 further comprising:
- receiving (S202) a second request message for a second file transfer from an endpoint associated with said conference within a predetermined time relative to receipt of said first request message;
- processing (S208) said first request message and said second request message jointly,
- wherein said step (S602) of modifying further comprises modifying said SDP media descriptions based upon information in both said first request message and said second request message; and
- wherein said step (S604) of transmitting invitation messages further comprises transmitting invitation messages for both said first file transfer and said second file transfer.

5. The method of claim 1, wherein said invitation messages are Session Initiation Protocol, SIP, messages and said step (S606) of selectively transferring said at least one file is performed using Message Session Relay Protocol, MSRP, connections.

6. A communications node comprising:
- an interface (508) for receiving (S600, S202) a first request message for a first file transfer from a first endpoint associated with a conference;
- a memory device (504) for storing (S204) Session Description Protocol, SDP, media descriptions associated with a second endpoint and a third endpoint of said conference; and
- a processor (502) configured to modify (S602) said SDP media descriptions by providing (S212, S214) a media line associated with said file transfer to an SDP media description associated with said second endpoint and to an SDP media description associated with said third endpoint based upon information provided in said first request message, and to transmit (S604) invitation messages for said first file transfer to said second and third endpoints using said modified media descriptions,
- wherein said processor (502) is further configured to selectively transfer (S606) said at least one file among said first, second and third endpoints based upon responses to said invitation messages.

7. The communications node of claim 6, wherein said processor (502) provides said media line by reusing (S212) an existing media line in at least one of said SDP media description associated with said second endpoint and said SDP media description associated with said third endpoint.

8. The communications node of claim 6, wherein said processor (502) provides said media line by adding (S214) a new media line to at least one of said SDP media description associated with said second endpoint and said SDP media description associated with said third endpoint.

9. The communications node of claim 6, wherein said interface unit (508) also receives a second request message for a second file transfer from an endpoint associated with said conference within a predetermined time relative to receipt of said first request message, and
- wherein said processor (502) processes said first request message and said second request message jointly by modifying said media descriptions based upon information in both said first request message and said second request message, and transmitting invitation messages for both said first file transfer and said second file transfer.

10. The communications node of claim 6, wherein said invitation messages are Session Initiation Protocol, SIP, messages and said step (S606) of selectively transferring said at least one file is performed using Message Session Relay Protocol, MSRP, connections.

11. The communications node of claim 6, wherein said communications node includes at least one conference focus, CF, entity (108).

12. A computer-readable medium, containing program instructions stored thereon which, when executed by a computer or processor in a communication node perform the steps of:
- receiving (S600, S202) a first request message for a first file transfer from a first endpoint associated with a conference;
- modifying (S602) Session Description Protocol, SDP, media descriptions associated with at least a second endpoint and a third endpoint, which endpoints are also associated with said conference, by providing (S212, S214) a media line associated with said file transfer to an SDP media description associated with said second endpoint and to an SDP media description associated with said third endpoint based upon information provided in said first request message;
- transmitting (S604) invitation messages for said first file transfer to said second and third endpoints using said modified SDP media descriptions; and
- selectively transferring (S606) said at least one file among said first, second and third endpoints based upon responses to said invitation messages.

13. The computer-readable medium of claim 12, wherein said step (S212, S214) of providing a media line further comprises:
- reusing (S212) an existing media line in at least one of said SDP media description associated with said second endpoint and said SDP media description associated with said third endpoint.

14. The computer-readable medium of claim 12, wherein said step (S212, S214) of providing a media line further comprises:
- adding (S214) a new media line to at least one of said SDP media description associated with said second endpoint and said SDP media description associated with said third endpoint.

15. The computer-readable medium of claim 12, further comprising:
- receiving (S202) a second request message for a second file transfer from an endpoint associated with said conference within a predetermined time relative to receipt of said first request message;
- processing (S208) said first request message and said second request message jointly,
wherein said step (S602) of modifying further comprises modifying said SDP media descriptions based upon information in both said first request message and said second request message; and
- wherein said step (S604) of transmitting invitation messages further comprise transmitting invitation messages for both said first file transfer and said second file transfer.

16. The computer-readable medium of claim 12, wherein said invitation messages are Session Initiation Protocol, SIP, messages and said step (S606) of selectively transferring said at least one file is performed using Message Session Relay Protocol, MSRP, connections.

## Patentansprüche

1. Verfahren zur Übertragung mindestens einer Datei an mehrere Endpunkte in einer Konferenz, wobei das Verfahren an einem Kommunikationsknoten durchgeführt wird und umfasst:
- Empfangen (S600, S202) einer ersten Anforderungsnachricht für eine erste Dateiübertragung von einem ersten Endpunkt, der mit der Konferenz verbunden ist;
- Abändern (602) von Sitzungsbeschreibungsprotokoll, SDP,-Medienbeschreibungen, die mindestens einem zweiten Endpunkt und einem dritten Endpunkt zugeordnet sind, wobei die Endpunkte ebenfalls mit der Konferenz verbunden sind, durch Bereitstellen (S212, S214) einer Medienzeile, die der Dateiübertragung zugeordnet ist, in eine SDP-Medienbeschreibung, die dem zweiten Endpunkt zugeordnet ist, und in eine SDP-Medienbeschreibung, die dem dritten Endpunkt zugeordnet ist, basierend auf Informationen, die in der ersten Anforderungsnachricht bereitgestellt werden;
- Übertragen (S604) von Einladungsnachrichten für die erste Dateiübertragung an die zweiten und dritten Endpunkte unter Verwendung der abgeänderten SDP-Medienbeschreibungen; und
- selektives Übertragen (S606) der mindestens einen Datei zwischen den ersten, zweiten und dritten Endpunkten basierend auf Antworten auf die Einladungsnachrichten.

2. Verfahren nach Anspruch 1, wobei der Schritt (S212, S214) des Bereitstellens einer Medienzeile ferner umfasst:
- Wiederverwenden (S212) einer bestehenden Medienzeile in mindestens einer von der SDP-Medienbeschreibung, die dem zweiten Endpunkt zugeordnet ist, und der SDP-Medienbeschreibung, die dem dritten Endpunkt zugeordnet ist.

3. Verfahren nach Anspruch 1, wobei der Schritt (S212, S214) des Bereitstellens einer Medienzeile ferner umfasst:
- Hinzufügen (S214) einer neuen Medienzeile zu mindestens einer von der SDP-Medienbeschreibung, die dem zweiten Endpunkt zugeordnet ist, und der SDP-Medienbeschreibung, die dem dritten Endpunkt zugeordnet ist.

4. Verfahren nach Anspruch 1, ferner umfassend:
- Empfangen (S202) einer zweiten Anforderungsnachricht für eine zweite Dateiübertragung von einem Endpunkt, der mit der Konferenz verbunden ist, innerhalb einer vorbestimmten Zeit in Bezug auf den Empfang der ersten Anforderungsnachricht;
- gemeinsames Verarbeiten (S208) der ersten Anforderungsnachricht und der zweiten Anforderungsnachricht,
- wobei der Schritt (S602) des Abänderns ferner ein Abändern der SDP-Medienbeschreibungen sowohl basierend auf Informationen in der ersten Anforderungsnachricht als auch in der zweiten Anforderungsnachricht umfasst; und
- wobei der Schritt (S604) des Übertragens von Einladungsnachrichten ferner sowohl ein Übertragen von Einladungsnachrichten für die erste Dateiübertragung als auch für die zweite Dateiübertragung umfasst.

5. Verfahren nach Anspruch 1, wobei die Einladungsnachrichten Sitzungseinleitungsprotokoll, SIP,-Nachrichten sind, und der Schritt (S606) des selektiven Übertragens der mindestens einen Datei unter Verwendung von Nachrichtensitzungs-Weiterleitungsprotokoll, MSRP,-Verbindungen erfolgt.

6. Kommunikationsknoten, umfassend:
- eine Schnittstelle (508) zum Empfangen (S600, S202) einer ersten Anforderungsnachricht für eine erste Dateiübertragung von einem ersten Endpunkt, der mit einer Konferenz verbunden ist;
- eine Speichervorrichtung (504) zum Speichern (5204) von Sitzungsbeschreibungsprotokoll, SDP,-Medienbeschreibungen, die einem zweiten Endpunkt und einem dritten Endpunkt der Konferenz zugeordnet sind; und
- einen Prozessor (502), der so konfiguriert ist, dass er die SDP-Medienbeschreibungen durch Bereitstellen (S212, S214) einer Medienzeile, die der Dateiübertragung zugeordnet ist, in eine SDP-Medienbeschreibung, die dem zweiten Endpunkt zugeordnet ist, und in eine SDP-Medienbeschreibung, die dem dritten Endpunkt zugeordnet ist, basierend auf Informationen, die in der ersten Anforderungsnachricht übertragen werden, abändert (S602) und Einladungsnachrichten für die erste Dateiübertragung unter Verwendung der abgeänderten Medienbeschreibungen an die zweiten und dritten Endpunkte überträgt (S604),
- wobei der Prozessor (502) ferner so konfiguriert ist, dass er die mindestens eine Datei basierend auf Antworten auf die Einladungsnachrichten selektiv zwischen den ersten, zweiten und dritten Endpunkten überträgt (S606).

7. Kommunikationsknoten nach Anspruch 6, wobei der Prozessor (502) die Medienzeile durch Wiederverwenden (S212) einer bestehenden Medienzeile in mindestens einer von der SDP-Medienbeschreibung, die dem zweiten Endpunkt zugeordnet ist, und der SDP-Medienbeschreibung, die dem dritten Endpunkt zugeordnet ist, bereitstellt.

8. Kommunikationsknoten nach Anspruch 6, wobei der Prozessor (502) die Medienzeile durch Hinzufügen (S214) einer neuen Medienzeile zu mindestens einer von der SDP-Medienbeschreibung, die dem zweiten Endpunkt zugeordnet ist, und der SDP-Medienbeschreibung, die dem dritten Endpunkt zugeordnet ist, bereitstellt.

9. Kommunikationsknoten nach Anspruch 6, wobei die Schnittstelleneinheit (508) außerdem eine zweite Anforderungsnachricht für eine zweite Dateiübertragung von einem Endpunkt, der mit der Konferenz verbunden ist, innerhalb einer vorbestimmten Zeit in Bezug auf den Empfang der ersten Anforderungsnachricht empfängt; und
- wobei der Prozessor (502) die erste Anforderungsnachricht und die zweite Anforderungsnachricht gemeinsam verarbeitet, indem er die Medienbeschreibungen sowohl basierend auf Informationen in der ersten Anforderungsnachricht als auch in der zweiten Anforderungsnachricht abändert und Einladungsnachrichten sowohl für die erste Dateiübertragung als auch für die zweite Dateiübertragung überträgt.

10. Kommunikationsknoten nach Anspruch 6, wobei die Einladungsnachrichten Sitzungseinleitungsprotokoll, SIP,-Nachrichten sind, und der Schritt (S606) des selektiven Übertragens der mindestens einen Datei unter Verwendung von Nachrichtensitzungs-Weiterleitungsprotokoll, MSRP,-Verbindungen erfolgt.

11. Kommunikationsknoten nach Anspruch 6, wobei der Kommunikationsknoten mindestens einen Konferenzfokus, CF,-Instanz (108) umfasst.

12. Computerlesbares Medium, das Programmbefehle darauf gespeichert enthält, die bei Ausführung durch einen Computer oder Prozessor in einem Kommunikationsknoten die folgenden Schritte ausführen:
- Empfangen (S600, S202) einer ersten Anforderungsnachricht für eine erste Dateiübertragung von einem ersten Endpunkt, der mit einer Konferenz verbunden ist;
- Abändern (602) von Sitzungsbeschreibungs, SDP,-Medienbeschreibungen, die mindestens einem zweiten Endpunkt und einem dritten Endpunkt zugeordnet sind, wobei die Endpunkte ebenfalls mit der Konferenz verbunden sind, durch Bereitstellen (S212, S214) einer Medienzeile, die der Dateiübertragung zugeordnet ist, in eine SDP-Medienbeschreibung, die dem zweiten Endpunkt zugeordnet ist, und in eine SDP-Medienbeschreibung, die dem dritten Endpunkt zugeordnet ist, basierend auf Informationen, die in der ersten Anforderungsnachricht bereitgestellt werden;
- Übertragen (S604) von Einladungsnachrichten für die erste Dateiübertragung an die zweiten und dritten Endpunkte unter Verwendung der abgeänderten SDP-Medienbeschreibungen; und
- selektives Übertragen (S606) der mindestens einen Datei zwischen den ersten, zweiten und dritten Endpunkten basierend auf Antworten auf die Einladungsnachrichten.

13. Computerlesbares Medium nach Anspruch 12, wobei der Schritt (S212, S214) des Bereitstellens einer Medienzeile ferner umfasst:
- Wiederverwenden (S212) einer bestehenden Medienzeile in mindestens einer von der SDP-Medienbeschreibung, die dem zweiten Endpunkt zugeordnet ist, und der SDP-Medienbeschreibung, die dem dritten Endpunkt zugeordnet ist.

14. Computerlesbares Medium nach Anspruch 12, wobei der Schritt (S212, S214) des Bereitstellens einer Medienzeile ferner umfasst:
- Hinzufügen (S214) einer neuen Medienzeile zu mindestens einer von der SDP-Medienbeschreibung, die dem zweiten Endpunkt zugeordnet ist, und der SDP-Medienbeschreibung, die dem dritten Endpunkt zugeordnet ist.

15. Computerlesbares Medium nach Anspruch 12, ferner umfassend:
- Empfangen (S202) einer zweiten Anforderungsnachricht für eine zweite Dateiübertragung von einem Endpunkt, der mit der Konferenz verbunden ist, innerhalb einer vorbestimmten Zeit in Bezug auf den Empfang der ersten Anforderungsnachricht;
- gemeinsames Verarbeiten (S208) der ersten Anforderungsnachricht und der zweiten Anforderungsnachricht,
- wobei der Schritt (S602) des Abänderns ferner ein Abändern der SDP-Medienbeschreibungen sowohl basierend auf Informationen in der ersten Anforderungsnachricht als auch in der zweiten Anforderungsnachricht umfasst; und
- wobei der Schritt (S604) des Übertragens von Einladungsnachrichten ferner ein Übertragen von Einladungsnachrichten sowohl für die erste Dateiübertragung als auch für die zweite Dateiübertragung umfasst.

16. Computerlesbares Medium nach Anspruch 12, wobei die Einladungsnachrichten Sitzungseinleitungsprotokoll, SIP,-Nachrichten sind, und der Schritt (S606) des selektiven Übertragens der mindestens einen Datei unter Verwendung von Nachrichtensitzungs-Weiterleitungsprotokoll, MSRP,-Verbindungen erfolgt.

## Revendications

1. Procédé de transfert d'au moins un fichier vers des points de terminaison multiples dans une conférence, le procédé étant effectué au niveau d'un noeud de communications et comprenant:
- recevoir (S600,S202) un premier message de demande pour un premier transfert de fichier depuis un premier point de terminaison associé à ladite conférence ;
- modifier (S602) des descriptions de média SDP (protocole de description de session) associées à au moins un second point de terminaison et un troisième point de terminaison, lesquels points de terminaison sont aussi associés à ladite conférence, en fournissant (S212,S214) une ligne média associée audit transfert de fichier à une description de média SDP associée audit second point de terminaison et à une description de média SDP associée audit troisième point de terminaison sur la base d'information fournie dans ledit premier message de demande ;
- transmettre (S604) des messages d'invitation pour ledit premier transfert de fichier auxdits second et troisième point de terminaison en utilisant lesdites descriptions de média SDP modifiées ; et
- transférer sélectivement (S606) ledit au moins un fichier parmi lesdits premier, second et troisième point de terminaison sur la base des réponses auxdits messages d'invitation.

2. Procédé selon la revendication 1, dans lequel ladite étape (S212,S214) de fourniture d'une ligne média comprend en outre de :
- réutiliser (S212) une ligne média existante dans au moins une de ladite description de média SDP associées audit second point de terminaison et ladite description de média SDP associée audit troisième point de terminaison.

3. Procédé selon la revendication 1, dans lequel ladite étape (S212,S214) de fourniture d'une ligne média comprend en outre de :
- ajouter (S214) une nouvelle ligne média à au moins une de ladite description de média SDP associée audit second point de terminaison et ladite description de média SDP associée audit troisième point de terminaison.

4. Procédé selon la revendication 1, comprenant en outre de :
- recevoir (S202) un second message de demande pour un second transfert de fichier depuis un point de terminaison associé à ladite conférence à l'intérieur d'un temps prédéterminée relatif à la réception dudit premier message de demande ;
- traiter (S208) ledit premier message de demande et ledit second message de demande conjointement,
- dans lequel ladite étape (S602) de modification comprend en outre de modifier lesdites descriptions de média SDP sur la base de l'informations dans à la fois le premier message de demande et le second message de demande ; et
- dans lequel ladite étape (S604) de transmission de messages d'invitation comprend en outre de transmettre les messages d'invitation pour à la fois le premier transfert de fichier et le second transfert de fichier.

5. Procédé selon la revendication 1, dans lequel lesdits messages d'invitation sont des messages SIP (protocole d'amorce de session) et ladite étape (S606) de transfert sélectif dudit au moins un fichier est effectuée en utilisant des connexions MSRP (protocole de relais de session de messages).

6. Noeud de communications comprenant :
- une interface (508) pour recevoir (S600,S202) un premier message de demande pour un premier transfert de fichier depuis un premier point de terminaison associé à une conférence ;
- un dispositif de mémoire (504) pour mémoriser (S204) des descriptions de média SDP (protocole de description de session) associées à un second point de terminaison et un troisième point de terminaison de ladite conférence ; et
- un processeur (502) configuré afin de modifier (S602) lesdites descriptions de média SDP en fournissant (S212,S214) une ligne média associée audit transfert de fichier à une description de média SDP associée audit second point de terminaison et à une description de média SDP associée audit troisième point de terminaison sur la base d'information fournie dans ledit premier message de demande, et transmettre (S604) des messages d'invitation pour ledit premier transfert de fichier auxdits second et troisième point de terminaison en utilisant lesdites descriptions de média modifiées,
- dans lequel ledit processeur (502) est en outre configuré afin de transférer sélectivement (S606) ledit au moins un fichier parmi lesdits premier, second et troisième points de terminaison sur la base des réponses auxdits messages d'invitation.

7. Noeud de communications selon la revendication 6, dans lequel ledit processeur (502) fournit ladite ligne média en réutilisant (S212) une ligne média existante dans au moins une de ladite description de média SDP associée audit second point de terminaison et ladite description de média SDP associée audit troisième point de terminaison.

8. Noeud de communications selon la revendication 6, dans lequel ledit processeur (502) fournit ladite ligne média en ajoutant (S214) une nouvelle ligne média à au moins une de ladite description de média SDP associée audit second point de terminaison et ladite description de média SDP associée audit troisième point de terminaison.

9. Noeud de communication selon la revendication 6, dans lequel ladite unité d'interface (508) reçoit aussi un second message de demande pour un second transfert de fichier depuis un point de terminaison associé à ladite conférence à l'intérieur d'un temps prédéterminé relatif à la réception dudit premier message de demande, et
- dans lequel ledit processeur (502) traite ledit premier message de demande et ledit second message de demande conjointement en modifiant lesdites descriptions de média sur la base des informations dans à la fois ledit premier message de demande et ledit second message de demande, et en transmettant des messages d'invitation pour à la fois ledit premier transfert de fichier et ledit second transfert de fichier.

10. Noeud de communication selon la revendication 6, dans lequel lesdits messages d'invitation sont des messages SIP (protocole d'amorce de session) et ladite étape (S606) de transfert sélectif dudit au moins un fichier est effectuée en utilisant des connexion MSRP (protocole de relais de session de message).

11. Noeud de communication selon la revendication 6, dans lequel ledit noeud de communication inclut au moins une entité de focalisation de conférence, CF (108).

12. Support lisible par ordinateur, comprenant des instructions de programme qui, quand elles sont exécutées par un ordinateur ou un processeur dans un noeud de communication, exécutent les étapes consistant à :
- recevoir (S600,S202) un premier message de demande pour un premier transfert de fichier depuis un premier point de terminaison associé à ladite conférence ;
- modifier (S602) des descriptions de média SDP (protocole de description de session) associées à au moins un second point de terminaison et un troisième point de terminaison, lesquels points de terminaison sont aussi associés à ladite conférence, en fournissant (S212,S214) une ligne média associée audit transfert de fichier à une description de média SDP associée audit second point de terminaison et à une description de média SDP associée audit troisième point de terminaison sur la base d'information fournie dans ledit premier message de demande ;
- transmettre (S604) des messages d'invitation pour ledit premier transfert de fichier auxdits second et troisième point de terminaison en utilisant lesdites descriptions de média SDP modifiées ; et
- transférer sélectivement (S606) ledit au moins un fichier parmi lesdits premier, second et troisième point de terminaison sur la base des réponses auxdits messages d'invitation.

13. Support lisible par ordinateur selon la revendication 12, dans lequel ladite étape (S212,S214) de fourniture d'une ligne média comprend en outre de :
- réutiliser (S212) une ligne média existante dans au moins une de ladite description de média SDP associée audit second point de terminaison et ladite description de média SDP associée audit troisième point de terminaison.

14. Support lisible par ordinateur selon la revendication 12, dans lequel ladite étape (S212,S214) de fourniture d'une ligne média comprend en outre de :
- ajouter (S214) une nouvelle ligne média à au moins une de ladite description de média SDP associée audit second point de terminaison et ladite description de média SDP associée audit troisième point de terminaison.

15. Support lisible par ordinateur selon la revendication 12, comprenant en outre de :
- recevoir (S202) un second message de demande pour un second transfert de fichier depuis un point de terminaison associé à ladite conférence à l'intérieur d'un temps prédéterminée relatif à la réception dudit premier message de demande ;
- traiter (S208) ledit premier message de demande et ledit second message de demande conjointement,
- dans lequel ladite étape (S602) de modification comprend en outre de modifier lesdites descriptions de média SDP sur la base de l'informations dans à la fois le premier message de demande et le second message de demande ; et
- dans lequel ladite étape (S604) de transmission de messages d'invitation comprend en outre de transmettre les messages d'invitation pour à la fois le premier transfert de fichier et le second transfert de fichier.

16. Support lisible par ordinateur selon la revendication 12, dans lequel lesdits messages invitation sont des messages de protocole d'amorce de session (SIP) et ladite étape (SD606) de transfert sélectif dudit au moins un fichier est effectuée en utilisant des connexions MSRP (protocole de relais de session de messages).
